Europäisches Patentamt

European Patent Office

Office européen des brevets

(19)

(11) Veröffentlichungsnummer: **0 471 958 A1**

# EUROPÄISCHE PATENTANMELDUNG

(12)

(21) Anmeldenummer: **91111065.8**

(51) Int. Cl.⁵: **B64C 1/24**

(22) Anmeldetag: **04.07.91**

(30) Priorität: **18.08.90 DE 4026192**

(43) Veröffentlichungstag der Anmeldung:
**26.02.92 Patentblatt 92/09**

(84) Benannte Vertragsstaaten:
**FR GB IT NL**

(71) Anmelder: **DEUTSCHE AIRBUS GMBH**
**Kreetslag**

**W-2000 Hamburg(DE)**

(72) Erfinder: **Cornelis, Gerhard**
**Kronkamp 23**
**W-2087 Hasloh(DE)**
Erfinder: **Kroll, Stefan**
**Eilenau 118**
**W-2000 Hamburg 76(DE)**

(54) **Flugzeugstreppe.**

(57) Eine vorgeschlagene flugzeugfeste Flugzeug-treppe zur Verbindung des Flugzeugrumpfes (9) mit einer Standfläche besitzt einen aus mindestens zwei Segmenten (3,4,5) ausgebildeten Rahmen (1) sowie im Bereich des Rahmens angeordnete Stufen (2). Hierbei bildet ein Endsegment (5) einen Teil des Rahmens (1) durch mindestens bereichsweise ange-ordnete Seitenholme (6), die teleskopartig mit Sei-tenholmen eines Hauptsegmentes (3) verbunden sind. Hierbei ist mindestens eine Stufe (2) im Bereich des Hauptsegmentes (3) in Richtung einer Treppenlängsachse (26) verschieblich gelagert.

FIG. 1

Die Erfindung betrifft eine Flugzeugtreppe zur Verbindung eines Flugzeugrumpfes mit einer Standfläche in Form einer flugfesten Treppe, die einen aus mindestens zwei Segmenten ausgebildeten Rahmen sowie im Bereich des Rahmens angeordnete Stufen aufweist und während der Betriebsphase des Flugzeuges im Flugzeugrumpf integriert ist.

Derartige Flugzeugtreppen als Zugang zum Flugzeuginnenraum sind in unterschiedlichen Ausführungsformen bekannt. Neben einteiligen verschwenkbaren Treppen, die als Teil einer Außenwandung des Flugzeuges ausgebildet sind und einteiligen Einschubtreppen, die von Ausnehmungen im Bereich des Flugzeugrumpfes aufgenommen werden können, sind zweiteilige Falteinschubtreppen bekannt, bei denen zwei Segmente verschwenkbar miteinander verbunden sind und in einem gegeneinander verschwenkten Zustand in einen Aufnahmeraum im Bereich des Flugzeugrumpfes eingeschoben werden können. Für die bekannten Einschubtreppen ist jedoch ein dem Volumen der Treppen angepaßter großer Aufnahmeraum erforderlich. Eine Verwendung derartiger Einschubtreppen ist deshalb insbesondere bei Flugzeugen mit rumpfseitigen Hecktriebwerken problematisch. Die Verwendung bekannter Flugzeugtreppen ist darüber hinaus bei Flugzeugen problematisch, die sowohl eine insgesamt geringe Baugröße als auch relativ zu einer Standfläche hoch angeordnete Passagiertüren aufweisen.

Aufgabe der vorliegenden Erfindung ist es daher, eine Flugzeugtreppe der einleitend genannten Art so zu verbessern, daß sie raumsparend im Bereich des Flugzeugrumpfes angeordnet werden kann.

Diese Aufgabe wird erfindungsgemäß dadurch gelöst, daß ein Endsegment den Rahmen mindestens bereichsweise ausbildende Seitenholme aufweist, die teleskopartig mit Seitenholmen eines Hauptsegmentes verbunden sind und mindestens eine Stufe im Bereich des Hauptsegmentes in Richtung einer Treppenlängsachse verschieblich gelagert ist.

Die teleskopartige Ausbildung des Rahmens ermöglicht eine Verstauung mit einem geringen Bauvolumen. Das teleskopartige Zusammenschieben der Seitenholme ist aufgrund der Verschieblichkeit der Treppenstufen in Richtung der Treppenlängsachse möglich. Durch diese Längsverschieblichkeit verringern mindestens einige der Treppenstufen während eines Zusammenschiebens der Seitenholme ihren Abstand zueinander und ermöglichen somit eine kompakte Anordnung der Bauelemente der Flugzeugtreppe.

Gemäß einer bevorzugten Ausführungsform wird vorgeschlagen, daß zwischen dem Endsegment und dem Hauptsegment mindestens ein das Endsegment teleskopartig führendes und teleskopartig im Bereich des Hauptsegmentes geführtes Zwischensegment angeordnet ist. Die Verwendung eines Zwischensegmentes ermöglicht eine weitere Verringerung der Baugröße der Einzelsegmente und somit eine geringere Längserstreckung der Flugzeugtreppe in einem zusammengeschobenen Zustand.

Zur Gewährleistung eines definierten Bezugspunktes für die Positionierung der Treppe relativ zum Rahmen wird vorgeschlagen, daß im Bereich des Endsegmentes mindestens eine Stufe fest mit dem Rahmen verbunden ist. Eine definierte Verstellung und Positionierung der weiteren Stufen wird dadurch gewährleistet, daß mindestens eine verschiebliche Stufe sowohl mit einer weiteren verschieblichen Stufe als auch mit der fest mit dem Rahmen verbundenen Stufe durch jeweils mindestens einen Gurt verbunden ist. Bei einem Ausfahren der Segmente wird hierdurch gewährleistet, daß die fest mit dem Rahmen verbundene Stufe die verschieblichen Stufen entsprechend der Längendimensionierung der Gurte auseinanderzieht und somit definierte Stufenabstände vorliegen. Aufgrund der Flexibilität der Gurte ist es darüber hinaus möglich, daß bei einem Zusammenfahren der Treppensegmente die fest mit dem Rahmen verbundenen Stufen die verschieblichen Stufen in Richtung der Längsachse verschieben und auf einem geringen Aufnahmevolumen anordnen.

Zur Vermeidung einer Beschädigung des Gurtes und zur Vermeidung von Gurtverschlingungen ist vorgesehen, daß der Gurt im Bereich eines Endes von einer federbelasteten Rolle beaufschlagt ist. Diese Rolle wickelt den Gurt bei einer Kraftentlastung während des Zusammenschiebens der Segmente auf und spult ihn bei einem Auseinanderziehen der Segmente wieder ab.

Zur Durchführung einer zuverlässigen Führung der Stufen wird vorgeschlagen, daß im Bereich von vier Ecken jeweils einer der Stufen jeweils ein sie mit einer anderen Stufe verbindender Gurt angeordnet ist.

Ein Zusammenschieben der Segmente wird dadurch erleichtert, daß im Bereich des Rahmens mindestens ein das Endsegment mit einer im Bereich eines Aufnahmeraumes angeordneten Wickeleinheit verbindendes Tragseil vorgesehen ist.

Eine ausreichende Positionierfreiheit für die Flugzeugtreppe wird dadurch gewährleistet, daß das Hauptsegment über mindestens ein Schwenkgelenk verschwenkbar im Bereich des Aufnahmeraumes gelagert ist. Diese Lagerung ermöglicht auch bei einem zweckmäßigerweise horizontal angeordneten Aufnahmeraum eine sich schräg zur Horizontalen erstreckende Anordnung des Rahmens der Flugzeugtreppe.

Eine sichere Benutzung der Flugzeugtreppe mit einer kompakten Bauform wird dadurch ermöglicht, daß ein Treppengeländer aus einem teleskopartigen Handlauf sowie verschwenkbar sowohl mit dem Handlauf als auch mit dem Rahmen verbundenen Stützen ausgebildet ist.

Für eine definierte Verschwenkung des Hauptsegmentes relativ zum Flugzeugrumpf wird vorgeschlagen, daß im Bereich des Schwenkgelenkes eine einen Schwenkwinkel zwischen dem Hauptsegment und dem Aufnahmeraum einstellende Schwenkpositionierung angeordnet ist.

Eine zugeordnete Positionierung den Treppengeländers relativ zum Rahmen wird dadurch ermöglicht, daß mindestens eine der Stützen von einer sie gegenüber dem Rahmen verschwenkenden Geländerpositionierung beaufschlagt ist.

Eine günstige Unterbringung einer zusammengeschobenen Flugzeugtreppe wird dadurch gewährleistet, daß die ineinander geschobenen End-, Zwischen- und Hauptsegmente entsprechend dem Aufnahmeraum ausgebildet sind.

In der Zeichnung ist ein Ausführungsbeispiel schematisch dargestellt. Es zeigen:

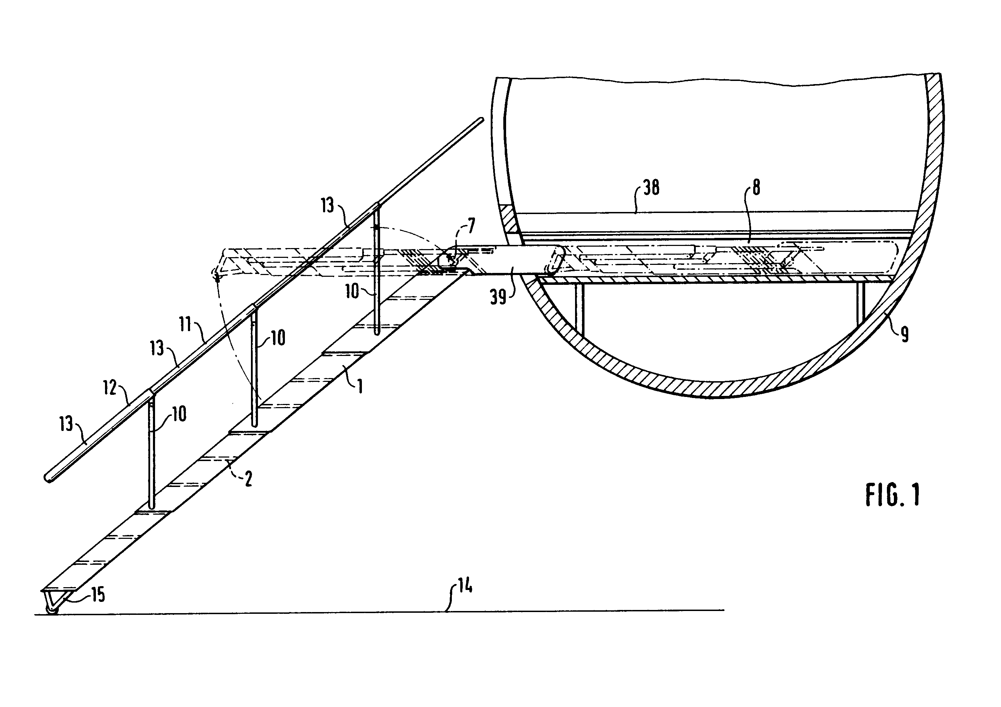

Fig. 1: einen Querschnitt durch einen Flugzeugrumpf mit einer in drei Betriebszuständen dargestellten Flugzeugtreppe, wobei in einem ersten Betriebszustand die Flugzeugtreppe zusammengeschoben innerhalb eines Aufnahmeraumes angeordnet ist, in einem zweiten Betriebszustand die Flugzeugtreppe zusammengeschoben aus dem Aufnahmeraum herausgezogen ist und in einem dritten Betriebszustand die Flugzeugtreppe gegenüber dem Flugzeugrumpf verschwenkt und auseinandergezogen ist,

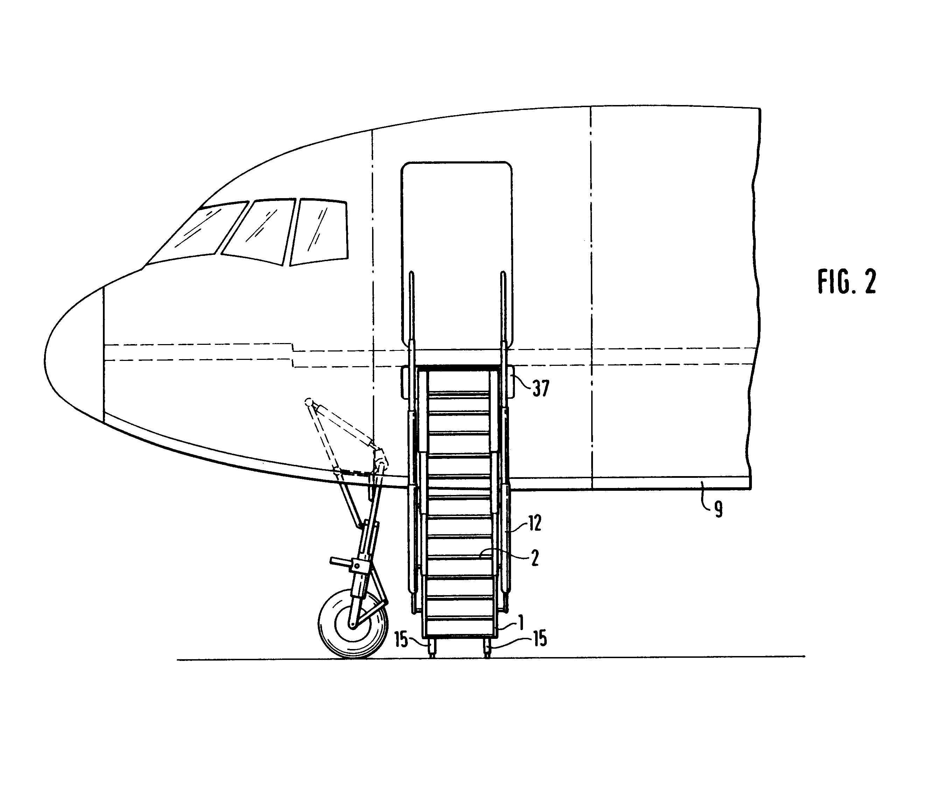

Fig. 2: eine teilweise Seitenansicht eines Flugzeuges mit ausgefahrener Flugzeugtreppe,

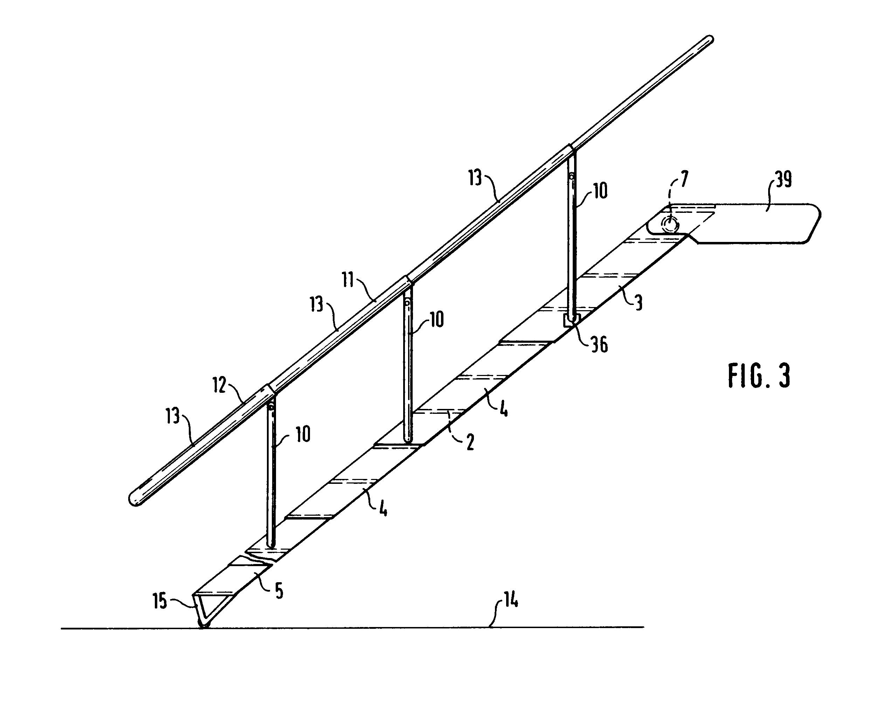

Fig. 3: eine vergrößerte Seitenansicht der Flugzeugtreppe im ausgefahrenen Zustand,

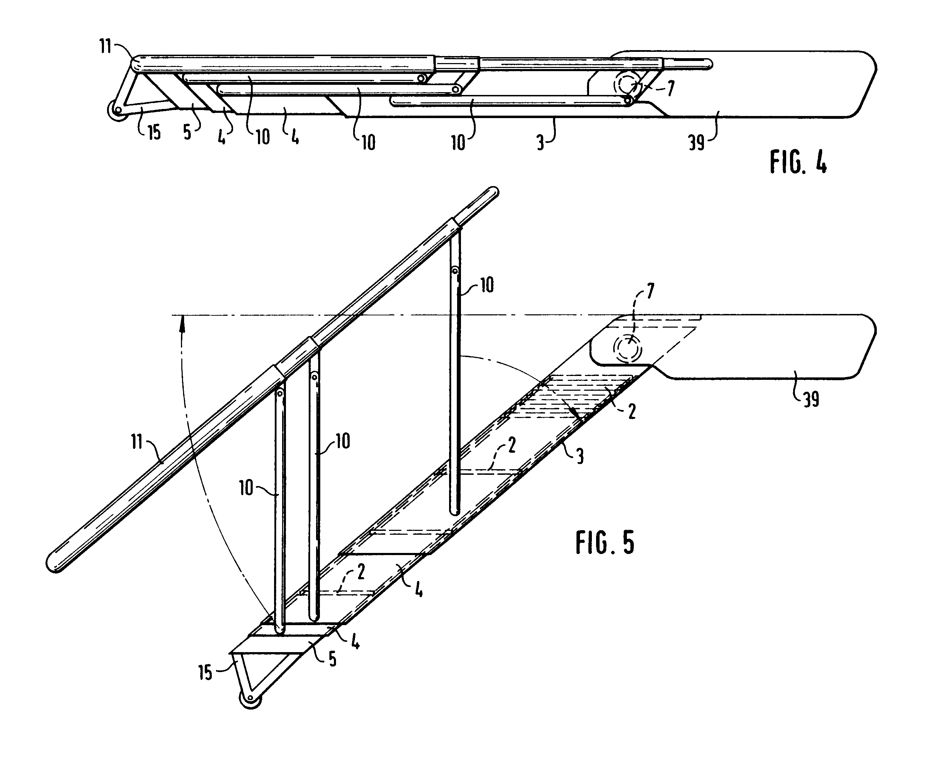

Fig. 4: eine Seitenansicht der Flugzeugtreppe im zusammengeschobenen Zustand,

Fig. 5: eine Seitenansicht einer zusammengeschobenen und gegenüber dem Flugzeugrumpf verschwenkten Flugzeugtreppe mit aufgerichtetem Treppengeländer,

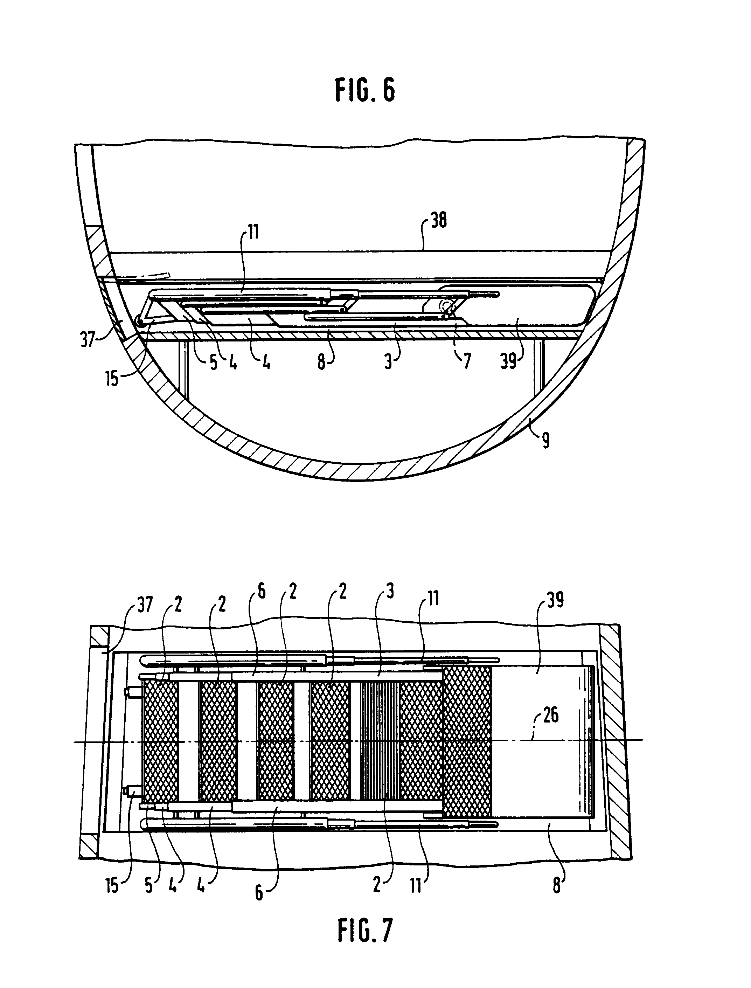

Fig. 6: eine vergrößerte teilweise Darstellung einer zusammengeschoben im Aufnahmeraum angeordneten Flugzeugtreppe,

Fig. 7: eine Draufsicht auf eine zusammengeschobene Flugzeugtreppe,

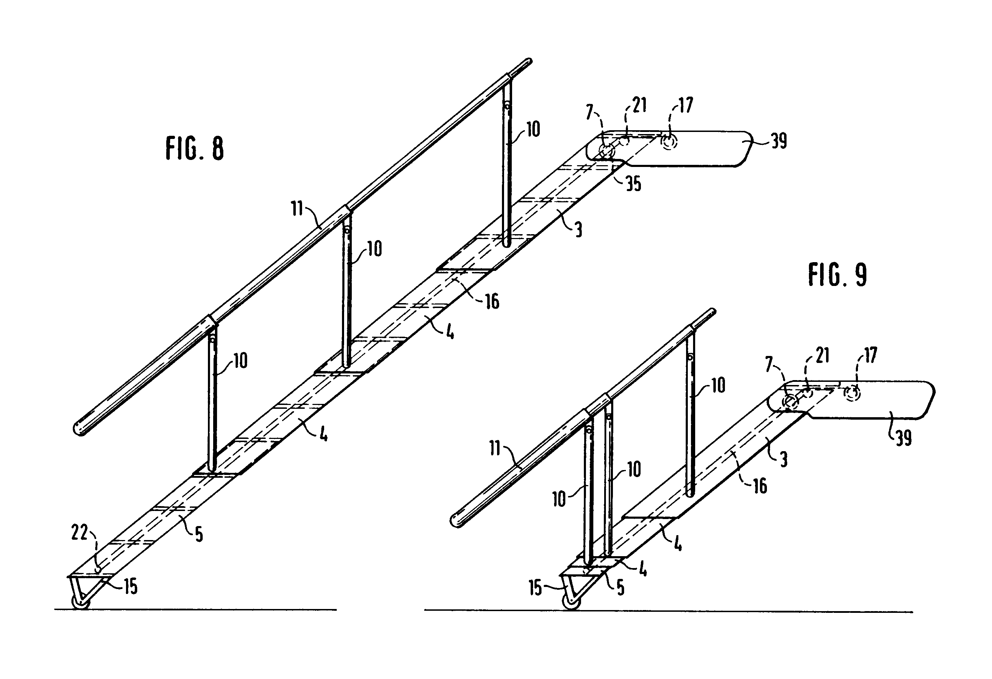

Fig. 8: eine Seitenansicht einer auseinandergezogenen Flugzeugtreppe mit aufgestelltem Treppengeländer und nicht ausgefahrenem Handlaufendsegment,

Fig. 9: eine Seitenansicht einer zusammengeschobenen Flugzeugtreppe mit aufgestelltem Treppengeländer,

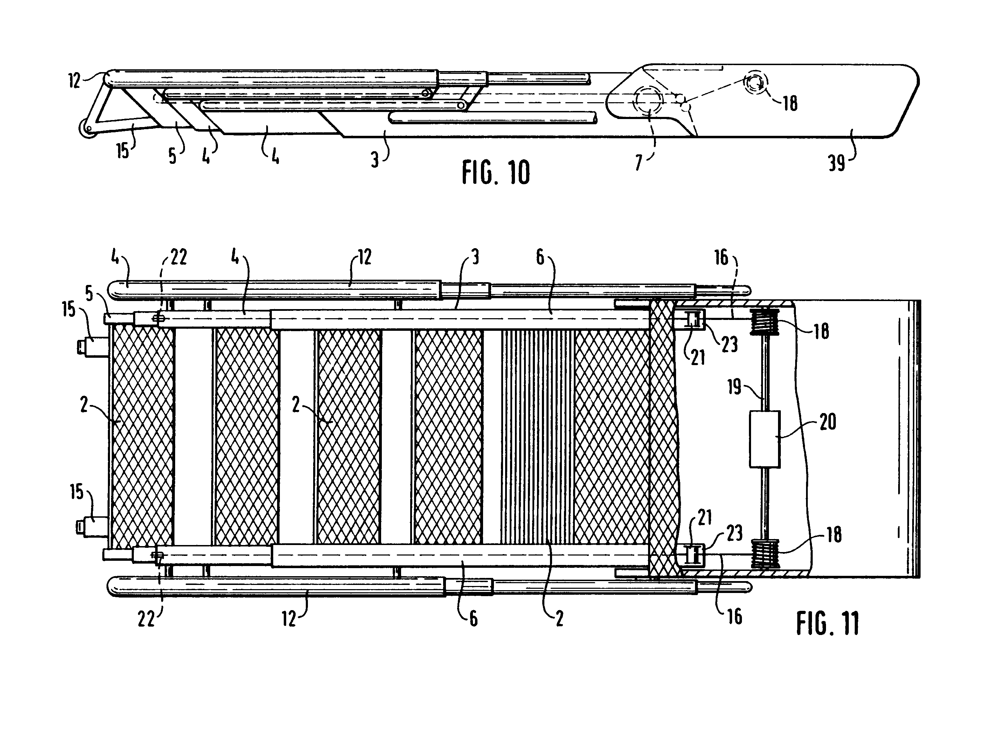

Fig. 10: eine Seitenansicht einer zusammengeschobenen Flugzeugtreppe mit unverschwenktem Treppengeländer,

Fig. 11: eine teilweise geschnitten dargestellte Draufsicht auf eine zusammengeschobene Flugzeugtreppe mit einem Seilzug zur Positionierung,

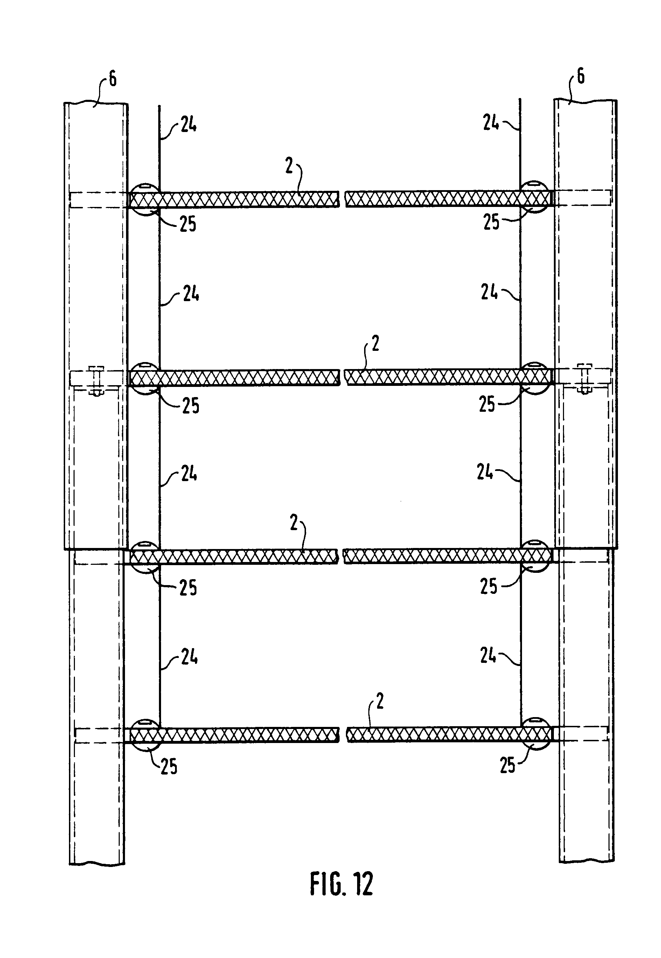

Fig. 12: eine teilweise vergrößerte Darstellung einer auseinandergezogenenen Flugzeugtreppe,

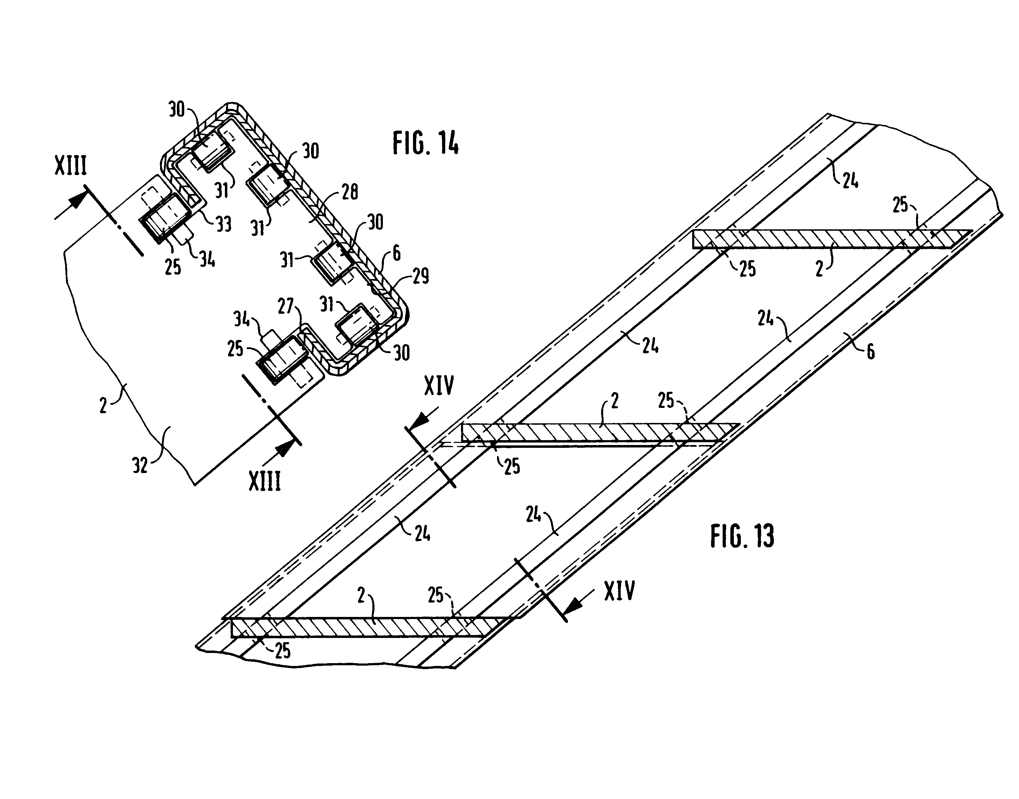

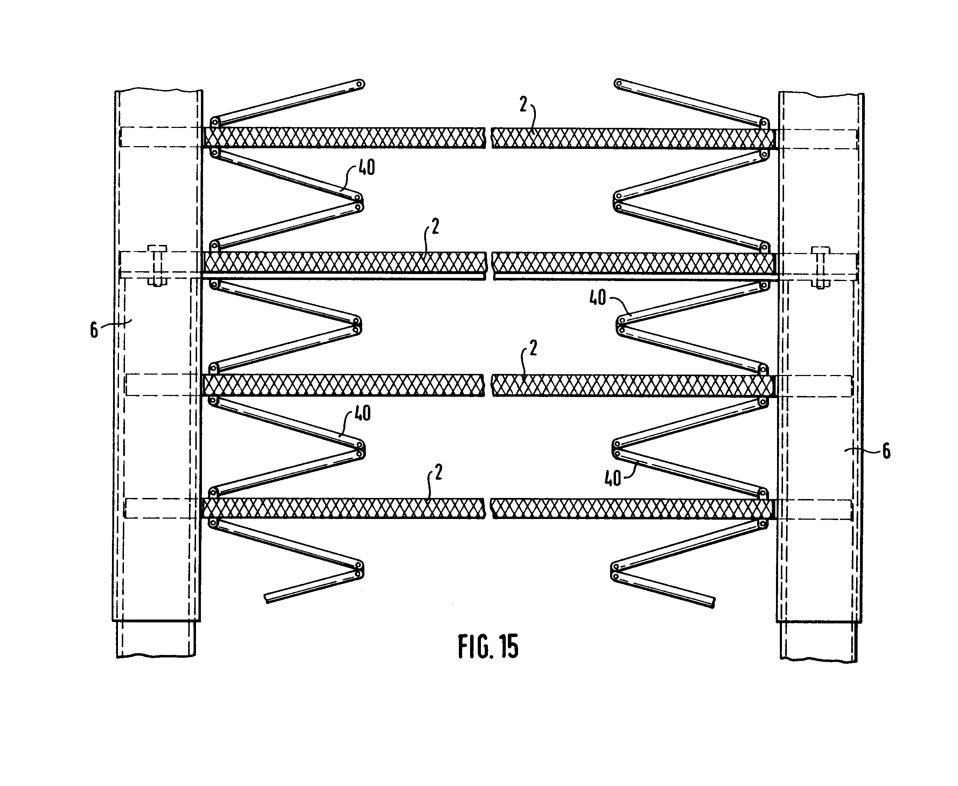

Fig. 13: eine prinzipielle Schnittdarstellung einer auseinandergezogene Flugzeugtreppe gemäß Schnittlinie XIII-XIII der Fig. 14,

Fig. 14: eine geschnittene teilweise Darstellung gemäß Schnittlinie XIV-XIV der Fig. 13.

Die dargestellte Flugzeugtreppe besteht im wesentlichen aus einem Rahmen (1) und Stufen (2). Der Rahmen (1) wird aus einem Hauptsegment (3), Zwischensegmenten (4) sowie einem Endsegment (5) gebildet. Die Segmente (3,4,5) sind im Bereich von den Rahmen (1) ausbildenden Seitenholmen (6) teleskopartig ineinander geführt.

Das Hauptsegment (3) ist im Bereich eines Schwenkgelenkes (7) verschwenkbar im Bereich eines Aufnahmeraumes (8) gelagert, der im Bereich eines Flugzeugrumpfes (9) angeordnet ist. Im Bereich der Seitenholme (6) sind verschwenkbare Stützen (10) gelagert, die gemeinsam mit einem Handlauf (11) ein Treppengeländer (12) ausbilden. Im Bereich ihrer den Seitenholmen (6) abgewandten Enden sind die Stützen (10) verschwenkbar mit dem Handlauf (11) verbunden. Der Handlauf (11) ist aus teleskopartig ineinander geführten Handlaufsegmenten (13) ausgebildet. Im Bereich seiner dem Hauptsegment (3) abgewandten Ausdehnung weist das Endsegment (5) ein es gegenüber einer Standfläche (14) abstützendes Fußelement (15) auf.

Innerhalb der Seitenholme (6) sind Tragseile (16) geführt, die jeweils im Bereich eines Endes mit dem Endsegment (5) verbunden sind und im Bereich eines diesem Ende abgewandten Endes im Bereich einer Wickeleinheit (17) gehaltert sind. Insbesondere ist daran gedacht, die Wickeleinheit (17) aus zwei Seilrollen (18) auszubilden, die von einer Welle (19) verbunden sind, die von einem Wickelantrieb (20) beaufschlagt ist. Zur Führung der Tragseile (16) im Bereich des Aufnahmeraumes (8) sind Umlenkrollen (21) vorgesehen. Es ist auch möglich, im Bereich des Endsegmentes (5) für jedes Tragseil (16) eine Umlenkrolle (22) anzuordnen und die Tragseile (16) jeweils schleifenförmig durch die Seitenholme (6) zu führen. Eines der Enden jedes Tragseiles (16) ist dabei mit der Seilrolle (18) und ein weiteres mit einem im Bereich des Aufnahmeraumes (8) vorgesehenen Festlager (23) verbunden. Als Wickelantrieb (20) ist insbesondere ein Elektromotor geeignet.

Die im Bereich des Endsegmentes (5) angeordneten Stufen (2) sind fest mit den Seitenholmen (6) verbunden. Die Stufen (2) im Bereich des Hauptsegmentes (3) sowie der Zwischensegmente (4) sind verschieblich im Bereich des Rahmens (1) gelagert und jeweils durch Gurte (24) miteinander verbunden. Im Bereich jeweils einer Ecke jeder Stufe (2) ist ein Gurt (24) befestigt, der im Bereich einer benachbarten Stufe (2) jeweils von einer federbelasteten Rolle (25) beaufschlagt ist. Die Rolle (25) ermöglicht bei einer Zugentlastung des Gurtes (24) eine automatische Aufwicklung des Gurtes (24).

Die Seitenholme (6) weisen im wesentlichen ein sich in Richtung einer Treppenlängsachse (26) erstreckendes Kastenprofil auf, das im Bereich seiner den Stufen (2) zugewandten seitlichen Begrenzung mit einem Führungsschlitz (27) versehen ist. Durch den Führungsschlitz (27) greifen die Stufen (2) mit Stufenenden (28) in einen Innenraum (29) der Seitenholme (6) ein. Im Bereich des Innenraumes (29) sind die Stufe (2) leitende Führungsrollen (30) angeordnet, die in angepaßt ausgebildete Ausnehmungen (31) der Stufenenden (28) eingreifen. Die Stufenenden (28) sind mit Stufenhauptteilen (32) über jeweils einen Stufenhals (33) verbunden, der den Führungsschlitz (27) durchgreift. Die Rollen (25) sind drehbeweglich im Bereich jeweils einer Gurtrollenhalterung (34) geführt.

Zur definierten Festlegung des Schwenkwinkels des Hauptsegmentes (3) relativ zum Flugzeugrumpf (9) ist im Bereich des Schwenkgelenkes (7) eine Schwenkpositionierung (35) angeordnet. Die Schwenkpositionierung (35) kann als eine Verzahnung oder als ein Kettenantrieb ausgebildet sein. Darüber hinaus ist zur Positionierung des Treppengeländers (12) relativ zum Rahmen (1) eine Geländerpositionierung (36) vorgesehen, die gleichfalls als ein Zahnradantrieb oder ein Kettenantrieb ausgebildet sein kann. Mit Hilfe der Geländerpositionierung wird das Treppengeländer aufgestellt bzw. derart verschwenkt, daß es im Bereich des Rahmens (1) anliegt.

Zur Ermöglichung einer Benutzung der Flugzeugtreppe wird die zusammengeschobene Flugzeugtreppe zunächst aus einer Öffnung (37) des unterhalb eines Innenbodens (38) angeordneten Aufnahmeraumes (8) herausgefahren. Nach einem ausreichenden Herausfahren erfolgt mit Hilfe der Schwenkpositionierung (35) eine Verschwenkung um das Schwenkgelenk (7) sowie mit Hilfe der Geländerpositionierung (36) ein Aufstellen des Treppengeländers (12). Die Halterung im Bereich des Flugzeugrumpfes (9) erfolgt mit Hilfe eines Halterungssegmentes (39). Auf Grund eines Abwikkelns der Tragseile (16) von der Wickeleinheit (17) werden das Endsegment (5) sowie die Zwischensegmente (4) in Folge der Schwerkrafteinwirkung aus dem Hauptsegment (3) sowie auseinander herausgezogen. Es ist aber auch möglich, zur Unterstützung des Ausfahrens der Flugzeugtreppe einen hydraulischen Antrieb vorzusehen. Darüber hinaus ist es auch möglich, andere Antriebe vorzusehen. Während des Auseinanderfahrens der Treppe werden die verschieblich im Bereich des Hauptsegmentes (3) sowie im Bereich der Zwischensegmente (4) gelagerten Stufen (2) von den fest mit dem Endsegment (5) verbundenen Stufen (2) aufgrund der Verbindung über die Gurte (24) auseinander gezogen. Gleichfalls erfolgt ein Auseinanderziehen der Handlaufsegmente (13) des Treppengeländers (12) in Richtung der Treppenlängsachse (26). Nach einem Abschluß des Ausfahrvorganges stützt sich die Treppe mit den Fußelementen (15) auf der Standfläche (14) ab und die Stufen (12) sind definiert relativ zueinander positioniert.

Der Einfahrvorgang der Treppe erfolgt bei einer Aufwicklung der Tragseile (16) auf die Wickeleinheiten (17) durch ein ineinanderziehen der Segmente (3,4,5). Die verschieblichen Stufen (2) werden dabei von den fest mit dem Endsegment (5) verbundenen Stufen vor sich hergeschoben und die jeweiligen Gurte (24) auf die Rollen (25) infolge der Federbelastung automatisch aufgewickelt. Nach einem vollständigen Ineinanderfahren der Segmente (3,4,5) und einem Herunterklappen des Treppengeländers (12) kann die Flugzeugtreppe nach einer geeigneten Veschwenkung relativ zum Aufnahmeraum (8) erneut in diesem verstaut werden.

**Patentansprüche**

1. Flugzeugtreppe zur Verbindung eines Flugzeugrumpfes mit einer Standfläche in Form einer flugfesten Treppe, die einen aus mindestens zwei Segmenten ausgebildeten Rahmen sowie im Bereich des Rahmens angeordnete Stufen aufweist und während der Betriebsphase des Flugzeuges im Flugzeugrumpf integriert ist, dadurch gekennzeichnet, daß ein Endsegment (5) den Rahmen (1) mindestens bereichsweise ausbildende Seitenholme (6) aufweist, die teleskopartig mit Seitenholmen (6) eines Hauptsegmentes (3) verbunden sind und mindestens eine Stufe (2) im Bereich des Hauptsegmentes (3) in Richtung einer Treppenlängsachse (26) verschieblich gelagert ist.

**2.** Flugzeugtreppe nach Anspruch 1, dadurch gekennzeichnet, daß zwischen dem Endsegment (5) und dem Hauptsegment (3) mindestens ein das Endsegment (5) teleskopartig führendes und teleskopartig im Bereich des Hauptsegmentes (3) geführtes Zwischensegment (4) angeordnet ist.

**3.** Flugzeugtreppe nach Anspruch 1 oder 2, dadurch gekennzeichnet, daß im Bereich des Endsegmentes (5) mindestens eine Stufe (2) fest mit dem Rahmen (1) verbunden ist.

**4.** Flugzeugtreppe nach mindestens einen der Ansprüche 1 bis 3, dadurch gekennzeichnet, daß mindestens eine verschiebliche Stufe (2) sowohl mit einer weiteren verschieblichen Stufe (2) als auch mit der fest mit dem Rahmen (1) verbundenen Stufe (2) durch jeweils mindestens einen Gurt (24) verbunden ist.

**5.** Flugzeugtreppe nach Anspruch 4, dadurch gekennzeichnet, daß der Gurt (24) im Bereich eines seiner Enden von einer federbelasteten Rolle (25) beaufschlagt ist.

**6.** Flugzeugtreppe nach Anspruch 4 und 5, dadurch gekennzeichnet, daß im Bereich von vier Ecken jeweils einer der Stufen (2) jeweils ein sie mit einer anderen Stufe (2) verbindender Gurt (24) angeordnet ist.

**7.** Flugzeugtreppe nach mindestens einen der Ansprüche 1 bis 6, dadurch gekennzeichnet, daß im Bereich des Rahmen (1) mindestens ein das Endsegment (5) mit einer im Bereich eines Aufnahmeraumes (8) angeordneten Wikkeleinheit (17) verbindendes Tragseil (16) vorgesehen ist.

**8.** Flugzeugtreppe nach mindestens einen der Ansprüche 1 bis 7, dadurch gekennzeichnet, daß das Hauptsegment (3) über mindestens ein Schwenkgelenk (7) verschwenkbar im Bereich des Aufnahmeraumes (8) gelagert ist.

**9.** Flugzeugtreppe nach mindestens einen der Ansprüche 1 bis 8, dadurch gekennzeichnet, daß ein Treppengeländer (12) aus einem teleskopartigen Handlauf (11) sowie verschwenkbar sowohl mit dem Handlauf (11) als auch mit dem Rahmen (1) verbundenen Stützen (10) ausgebildet ist.

**10.** Flugzeugtreppe nach mindestens einen der Ansprüche 1 bis 9, dadurch gekennzeichnet, daß im Bereich des Schwenkgelenkes (7) eine einen Schwenkwinkel zwischen dem Hauptsegment (3) und dem Aufnahmeraum (8) einstellende Schwenkpositionierung (35) angeordnet ist.

**11.** Flugzeugtreppe nach mindestens einen der Ansprüche 1 bis 10, dadurch gekennzeichnet, daß mindestens eine der Stützen (10) von einer sie gegenüber dem Rahmen (1) verschwenkenden Geländerpositionierung (36) beaufschlagt ist.

**12.** Flugzeugtreppe nach mindestens einen der Ansprüche 1 bis 11, dadurch gekennzeichnet, daß die ineinandergeschobenen End-, Zwischen- und Hauptsegmente (3,4,5) entsprechend dem Aufnahmeraum (8) ausgebildet sind.

FIG. 1

EP 0 471 958 A1

FIG. 2

FIG. 3

FIG. 4

FIG. 5

# FIG. 6

# FIG. 7

FIG. 9

FIG. 8

FIG. 10

FIG. 11

EP 0 471 958 A1

FIG. 12

FIG. 14

FIG. 13

EP 0 471 958 A1

FIG. 15

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 217 211 (AERAZUR CARRIER ING.) <br> * Seite 1, Zeile 1 - Seite 1, Zeile 11 * * * Seite 2, Zeile 4 - Seite 2, Zeile 36 * * * Seite 3, Zeile 32 - Seite 5, Zeile 30 * * * Seite 6, Zeile 29 - Seite 6, Zeile 40; Abbildungen 1-6 * * | 1,2 | B 64 C 1/24 |
| A | | 3,4,6-9, 12 | |
| | − − − | | |
| Y | US-A-2 812 528 (ODELL) <br> * Spalte 1, Zeile 18 - Spalte 1, Zeile 44 * * * Spalte 2, Zeile 7 - Spalte 2, Zeile 15 * * * Spalte 3, Zeile 18 - Spalte 3, Zeile 26 * * * Spalte 4, Zeile 75 - Spalte 5, Zeile 54 * * * Spalte 6, Zeile 3 - Spalte 6, Zeile 36; Abbildungen 1,3,7-9 * * | 1,2 | |
| A | | 8,9,12 | |
| | − − − − − | | |
| | | | **RECHERCHIERTE SACHGEBIETE (Int. Cl.5)** |
| | | | B 64 C <br> E 04 F <br> B 63 B |

Der vorliegende Recherchenbericht wurde für alle Patentansprüche erstellt

| Recherchenort | Abschlußdatum der Recherche | Prüfer |
|---|---|---|
| Den Haag | 11 November 91 | ZERI A. |